Europäisches Patentamt

European Patent Office

Office européen des brevets

(11) Publication number: **0 194 762**
**A2**

# (12) EUROPEAN PATENT APPLICATION

(21) Application number: **86301060.9**

(22) Date of filing: **17.02.86**

(51) Int. Cl.⁴: **G 01 N 1/06**

(30) Priority: **15.03.85 DE 3509395**

(43) Date of publication of application:
**17.09.86 Bulletin 86/38**

(84) Designated Contracting States:
**AT FR GB SE**

(71) Applicant: **PARKE DAVIS AND COMPANY**
**201 Tabor Road**
**Morris Plains New Jersey 07950(US)**

(72) Inventor: **Kempe, Manfred**
**Obstgartenweg 10**
**D-6909 Leimen(DE)**

(74) Representative: **Coxon, Philip et al,**
**Eric Potter & Clarkson 14 Oxford Street**
**Nottingham NG1 5BP(GB)**

(54) **Mounting device for mounting an optical observation device to a microtome.**

(57) A mounting device (22) for mounting an optical observation device (24) to a microtome (10) so that an image plane of the observation device (24) is adjustable to a cutting edge (26) of a cutting knife (20) of the microtome. The mounting device (22) comprises a support member (30) which is pivotable about a pivot axis (32) spaced from the cutting edge (26) in order to adjust the observation device (24) to the cutting edge (26). The mounting device (22) is also slidable linearly in a direction transverse to the pivot axis (32).

FIG.1

EP 0 194 762 A2

## MOUNTING DEVICE FOR MOUNTING AN OPTICAL OBSERVATION DEVICE TO A MICROTOME

The invention relates to a mounting device for mounting an optical observation device to a microtome. More particularly the invention is concerned with a mounting device for mounting an optical observation device having an image plane which is adjustable to a cutting edge of a cutting knife of the microtome.

With an observation device of the above type it is possible to observe a specimen while it is being thinly sectioned with the cutting edge of the cutting knife. This enables accurate thin sections to be produced. The observation device may be, for example, a large-field magnifying lens or a stereo-zoom microscope.

It is known to arrange the observation device with linear sliding mobility on the mounting device. Mutually movable guide devices are provided for the linear sliding which need to be machined extremely precisely in order to avoid any mechanical play therebetween. Any mechanical play would disadvantageously affect the adjustment of the optical observation device to the cutting edge of the cutting knife. The manufacure of guide devices with such small tolerance in the dimensions is extremely time-consuming; naturally this time outlay is reflected in the overall cost.

It is an object of the present invention to provide a mounting device in which the precise adjustment of the image plane of the optical observation device can be performed by simpler means than has hitherto been possible.

According to one aspect of the present invention there is provided a mounting device for mounting an optical observation device to a microtome, the optical observation device having an image plane adjustable to a cutting edge of a cutting knife of the microtome, said mounting device comprising a support member for supporting the optical observation device, said support member being pivotable about a pivot axis spaced from the cutting edge, whereby the image plane can be adjusted to the cutting edge.

Due to the pivotal movement the observation device is adjusted along a circular arc, the centre of which corresponds to the pivot axis. As the distance between the observation device and the pivot axis is increased, so the portion of the circular arc along which the device is adjusted becomes a closer approximation to a straight line. However, the deviation of the circular arc from a straight line is unimportant if the observation device has a large image field. Such an image field is provided in, for example, a large-field magnifying lens or a stereo-zoom microscope.

It has been found advantageous to arrange the pivot axis at least approximately parallel to the cutting edge. With such a construction the plane of the circular arc along which the observation device is adjustable is aligned at right angles to the cutting edge, so that lack of lateral sharpness in the image field is avoided.

Preferably, the pivot axis is provided at a first end of the support member, and the observation device can be provided at a second end of the support member remote from the first end. This arrangement provides a relatively large distance between the pivot axis and the observation device. This distance corresponds to the radius of the circular arc along which the observation device is pivoted. As explained above, the greater this radius, the closer the movement along the circular arc approximates to a linear path.

It has been found particularly convenient for the mounting device to be slidable linearly in a direction substantially transverse to the pivot axis. With such a linearly slidable mounting device, it is possible to adjust the mounting device together with the observation device in a direction at least approximately at right angles to the cutting edge; this enables a specimen to be thinly sectioned to be observed accurately along the cutting edge of the cutter, and also enables a thinly sectioned specimen adjacent to the cutting edge to be observed. Thus by means of this arrangement specimens can be observed before, during and after sectioning.

To provide this sliding movement preferably the mounting device includes a sliding element extending substantially transverse to the pivot axis, and guide means adapted to be secured to the microtome, the sliding element being mounted slidably in the guide means; the support member may be pivotally mounted on the sliding element. The pivotal mounting of the guide means relative to the support member may then be effected by means of a hinge or by means of a spring. With a spring, a mechanical pretensioning occurs between the support member and the guide means when the support member is pivoted about the pivot axis. Due to this mechanical pretensioning, a highly accurate adjustment is possible of the image plane of the observation device to the cutting edge and to a horizontal plane in which the cutting edge is disposed.

Desirably the guide means is provided with at least one aperture, the sliding element being linearly slidable through the or each aperture; it is also desirable that the guide means is provided with securing means for removably securing the mounting device to the microtome. The sliding element may be provided with at least one elongate element which extends with linear sliding mobility through the or each aperture. Preferably two juxtaposed parallel apertures are provided in the guide means through which two juxtaposed parallel elongate elements may extend. The elongate elements may be connected to one another in the region of the second end of the support member. In this way, a mechanically stable construction of the sliding element is obtained. Due to the construction of the guide means with the securing means, it is possible in simple manner to remove the mounting device from the microtome when required.

In a further development the guide means is pivotable about the securing means. In this manner the mounting device is pivotable not only in one plane which extends at right angles to the cutting edge, but is also pivotable about other planes which form an acute angle with this plane and are simultaneously oriented at an angle to the cutting edge (and at right angles to the horizontal plane in which the cutting edge is disposed). Due to the pivotable construction of the guide means about the securing means it is possible in a simple manner to adjust very precisely the mounting device together with the observation device relative to the microtome.

Preferably the pivotal axis of the guide means about the securing means is substantially transverse to the pivot axis of the support member.

The securing means may comprise a screw which is adapted to engage a threaded bushing provided on the microtome; an aperture may be provided in the support member to permit access to the screw.

It has been found convenient to provide adjustment means to adjust the angle between the sliding element and the support member. To each angle between the sliding element and the support member there corresponds a position of the observation device on a circular arc, the centre of which is defined by the pivot axis.

The adjustment means may be provided with a screw having an actuating element which projects above the support member. The actuating element may be a rotary knob, for example.

The support member is preferably of lid-like construction and provided with illuminating means. The lid-like construction of the pivot arm prevents the operator from being dazzled by the light emitted from the illuminating means and helps to illuminate the workfield of the microscope correctly, so that good observation of the thin sectioning work is possible.

The support member may comprise an upper face having a side flange depending from opposite edges of the upper face; the illuminating means can be disposed between the two side flanges beneath the upper face.

The support member may be provided with an aperture adapted to receive the optical observation device, and the optical observation device may be exchangeable, so that it is possible to replace one observation device with another.

According to another aspect of the invention there is provided a microtome comprising a cutter having a cutting edge, and a mounting device for an optical observation device having an image plane which is adjustable to the cutting edge, said mounting device including a pivot axis spaced from the cutting edge and means to adjust the image plane to the cutting edge about the pivot axis.

Advantageously the mounting device comprises a mounting device as described above.

Reference is now made to the accompanying drawings, in which:-

Figure 1 is a side elevation of a microtome having a mounting device according to the invention;

Figure 2 is a longitudinal section of the detail II shown in Figure 1 on a larger scale;

Figure 3 is a section along the section line III-III of Figure 2;

Figure 4 is a longitudinal section of the detail IV shown in Figure 1 on a larger scale; and

Figure 5 is a section along the line V-V of Figure 2.

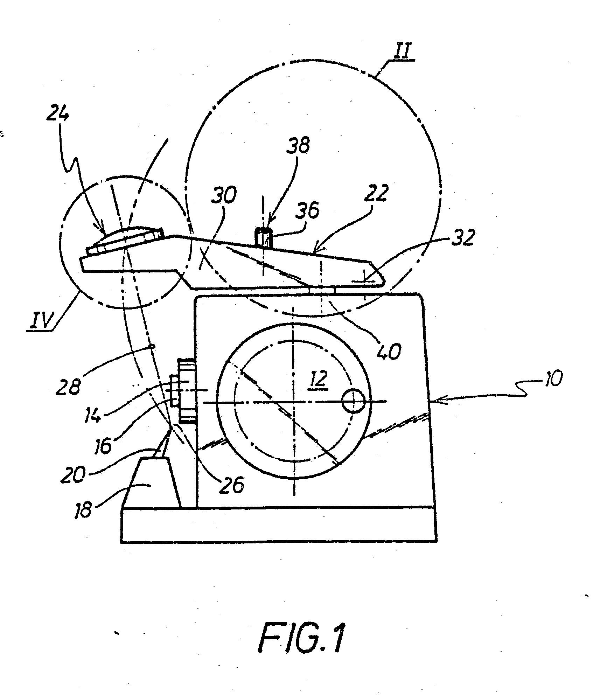

In Figure 1 a microtome 10 includes a handwheel 12 for the reciprocating vertical movement of an object tensioning device 14 into which an object 16 to be thinly sectioned is tensioned. A clamping device 18 is provided to clamp a cutting knife 20 having a cutting edge 26. The microtome 10 is constructed with a mounting device 22 for mounting an optical observation device 24 to the microtome.

The image plane of the observation device 24 (which may be, for example, a large-field magnifying lens, as illustrated in Figure 1, or a stereo-zoom microscope (not shown)) is adjustable to the cutting edge 26 of the cutting knife 20. This adjustability of the image plane of the observation device 24 to the cutting edge 26 is indicated by the fine chain-dotted line 28.

The mounting device 22 comprises a support member 30 in the form of a pivot arm which is pivotable about a pivot axis 32 in order to adjust the observation device 24 to the cutting edge 26. An actuating element 36 of an adjustment means 38 is provided for the adjustment of the observation device 24 to the cutting edge 26; the actuating element extends above the support member 30. Guide means 40 is provided and is secured to the microtome 10.

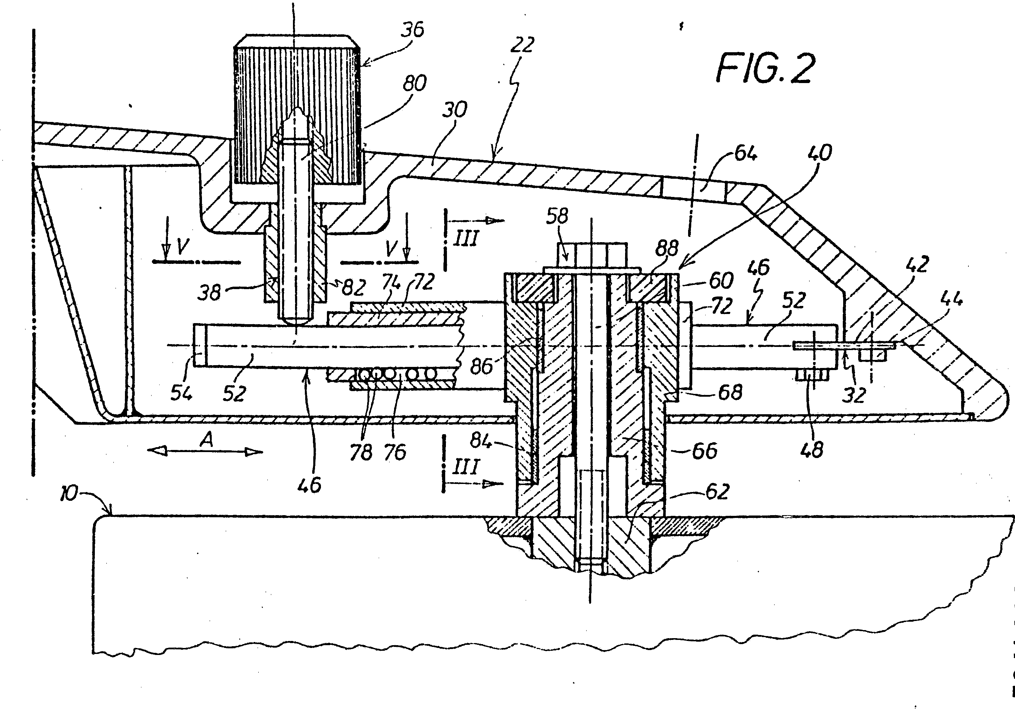

Figure 2 shows a section of the mounting device 22. The support member 30 is pivotable about the pivot axis 32 in order to adjust the observation device 24 to the cutting edge 26 of the microtome 10. In the embodiment shown, the pivot axis is formed by a leaf spring 42 which is fastened by a screw 44 to the support member 30 and by screws 48 to a sliding element 46.

The mounting device 22 is slidable linearly in a direction which is indicated by a double arrow A in Figure 2; this direction is transverse to the pivot axis 32. The support member 30 is pivotally mounted to the sliding element 46, and the sliding element 46 is slidably mounted to the guide means 40.

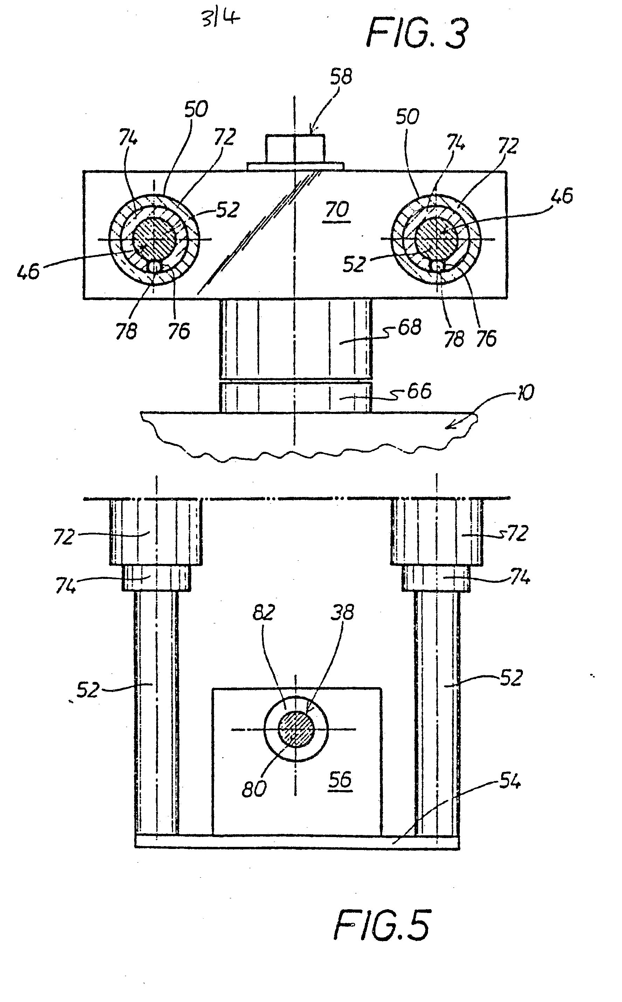

As is shown in Figure 3, the guide means 40 is provided with two juxtaposed parallel apertures 50 through which the sliding element 46 extends and with respect to which the element 46 has linear sliding mobility. The sliding element 46 is provided with two juxtaposed parallel elongate rod-shaped elements 52, which are also shown in Figure 5. An end face of the rod-shaped elements 52 are mutually connected by means of a connecting member 54. An abutment element 56, which extends centrally from the connecting member 54, lies parallel to the rod-shaped element 52; the adjustment means 38 abuts the abutment element 56.

The guide means 40 is provided with securing means 58 for removably securing the mounting device 22 to the microtome 10. The securing means 58 has a screw 60 which is engageable in a threaded bushing 62 provided on the microtome 10. The screw 60 is accessible through an aperture 64 provided in the support member 30. The securing means 58 also has a stamped female bushing 66 and a male body 68 which is adapted in shape to the female bushing 66, and is constructed with a transverse beam 70. The transverse beam 70 is provided with two apertures 50. Male bushings 72, in which female bushings 74 are provided, are arranged in the apertures 50. Each female bushing is provided with a slot 76 which houses balls 78. The two rod-shaped elements 52 of the sliding element 46 are mounted with linear sliding mobility relative to the guide devide 40 on these balls 78; thus the balls 78 act as bearings.

The angle between the sliding element 46 and the support member 30 is adjustable by the adjustment means 38. The adjustment means 38 is provided with a screw 80 which is firmly connected to the actuating element 36. The screw 80 is engaged through a threaded bushing 82 which is fastened to the support member 30. The actuating element 36 can be rotated to move the adjustment means 38 upwardly or downwardly relative to the sliding element 46, thereby adjusting the angle.

Bearing bushings 84 and 86 are disposed between the female bushing 66 and the male body 68. A sealing ring 88 is retained firmly between the female bushing 66 and the male body 68 by a head of the screw 60.

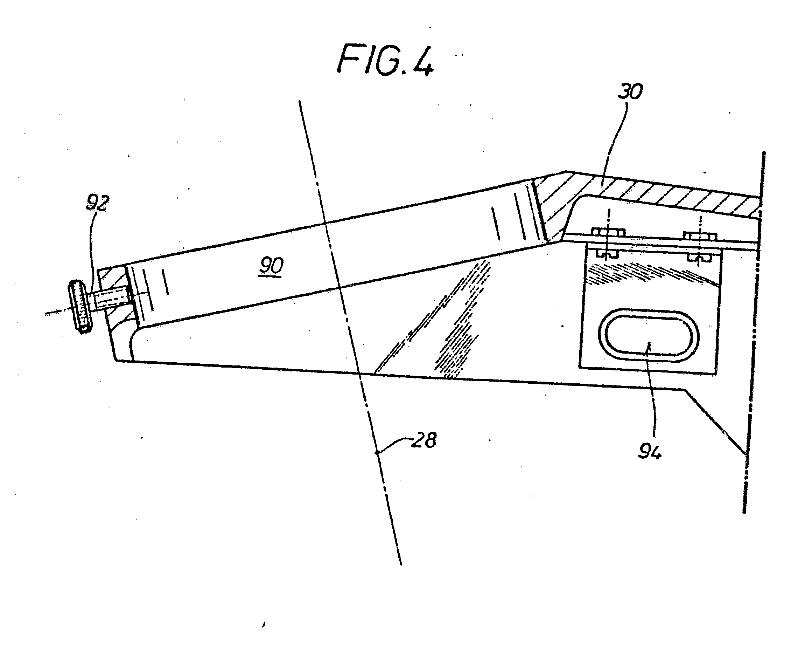

As may be seen from Figure 4, the support member 30 is provided with an aperture 90 for the reception of the optical observation device 24. A screw 92 is provided to fasten the optical observation device 24 in the aperture 90. Thus, the observation device 24 is removable and can be exchanged for another device. Illuminating means 94 is arranged on the underside of the support member 30, for illuminating the cutting edge 26.

CLAIMS

1. A mounting device for mounting an optical observation device to a microtome, the optical observation device having an image plane adjustable to a cutting edge of a cutting knife of the microtome, characterised in that said mounting device comprises a support member for supporting the optical observation device, and said support member is pivotable about a pivot axis spaced from the cutting edge, whereby the image plane can be adjusted to the cutting edge.

2. A mounting device according to Claim 1, characterised in that the pivot axis is disposed substantially parallel to the cutting edge.

3. A mounting device according to Claim 1 or 2, characterised in that the pivot axis is provided at a first end of the support member, and the observation device can be provided at a second end of the support member remote from the first end.

4. A mounting device according to Claim 1, 2 or 3, characterised in that it is slidable linearly in a direction substantially transverse to the pivot axis.

5. A mounting device according to Claim 4, characterised by a sliding element extending substantially transverse to the pivot axis, and a guide means adapted to be secured to the microtome, wherein the sliding element is mounted slidably in the guide means, and the support member is pivotally mounted on the sliding element to pivot about the pivot axis.

6. A mounting device according to Claim 5, characterised in that the guide means is provided with at least one aperture, the sliding element being linearly slidable through the or each aperture, and the guide means is provided with securing means for removably securing the mounting device to the microtome.

7. A mounting device according to Claim 6, characterised in that the guide means is pivotable about the securing means.

8. A mounting device according to Claim 6 or 7, characterised in that the securing means is provided with a screw adapted to engage a threaded bushing provided on the microtome, and an aperture is provided in the support member to permit access to said screw.

9. A mounting device according to Claim 5, 6, 7 or 8, characterised in that an adjustment means is provided to adjust the angle between the sliding element and the support member.

10. A mounting device according to Claim 9, characterised in that the adjustment means is provided with a screw having an actuating element which projects above the support member.

11. A mounting device according to any preceding claim, characterised in that the support member is provided with an aperture adapted to receive the optical observation device.

12. A mounting device according to any preceding claim, characterised in that the support member is provided with illumination means for illuminating the image plane of the optical observation device.

13. A microtome characterised by a cutter having a cutting edge, and a mounting device for an optical observation device having an image plane which is adjustable to the cutting edge, said mounting device including a pivot axis spaced from the cutting edge and means to adjust the image plane to the cutting edge about the pivot axis.

14. A microtome according to Claim 13, characterised in that the means to adjust the image plane comprises a support member which is pivotable about the pivot axis.

FIG.1

FIG.2

0194762

FIG. 3

FIG.5

FIG.4

30

94

28

90

92